# EUROPÄISCHE PATENTSCHRIFT

(11) **EP 1 986 885 B1**
(45) Veröffentlichungstag und Bekanntmachung des Hinweises auf die Patenterteilung: **28.04.2010**
(21) Anmeldenummer: 07718130.3
(22) Anmeldetag: 19.01.2007
(51) Int. Cl.: B60R 11/00, B60R 7/04

(54) **VORRICHTUNG ZUR SICHERUNG EINES GEGENSTANDES IN EINEM FAHRZEUG ODER FLUGZEUG**
DEVICE FOR SECURING AN ARTICLE IN A VEHICLE OR AN AIRPLANE
DISPOSITIF DE SECURISATION D'UN OBJET DANS UN VEHICULE TERRESTRE OU AERIEN

(30) Priorität: 20.01.2006 DE 102006002890
(43) Veröffentlichungstag der Anmeldung: 05.11.2008
(73) Patentinhaber: HS Genion GmbH, 82205 Gilching (DE)
(72) Erfinder: KLAFSKY, Josef, 87616 Markt Oberdorf (DE); RÖSCH, Christoph, 82229 Seefeld (DE)
(74) Vertreter: Grünberg, Thomas
(86) Internationale Anmeldenummer: PCT/DE2007/000123
(87) Internationale Veröffentlichungsnummer: WO 2007/082523

(56) Entgegenhaltungen:
- EP-A- 1 323 584
- DE-A1- 10 036 065
- DE-A1- 10 339 730
- FR-A- 1 078 899
- JP-A- 60 110 544

## Beschreibung

Die Erfindung betrifft eine Vorrichtung zur Sicherung eines Gegenstandes, insbesondere einer Tasche, eines Aktenkoffers oder dergleichen an einem Wandabschnitt in einem Fahrzeug oder Flugzeug mit den Merkmalen des Oberbegriffs des Patentanspruchs 1.

Aus der Druckschrift FR 1 078 899 ist eine Vorrichtung zur Sicherung eines Gegenstands im Bereich eines Sitzes eines Kraftfahrzeuges bekannt. Diese Vorrichtung umfasst einen Spannbügel, der an einem eine Schwenkachse bildenden Rohr angeformt ist, das beidseits an einem lagerbock gelagert ist. In dem Rohr ist eine Vorspannfeder angeordnet, mittels der das Rohr und damit der Bügel in Richtung eines Wandabschnitts zur Sicherung des Gegenstands vorgespannt ist.

Feiner ist aus der DE 199 52 156 A1 eine Vorrichtung bekannt, die als Fixiermittel unter anderem ein sich in horizontaler Richtung erstreckendes elastisches Band umfasst, das den zu sichernden Gegenstand in horizontaler Richtung umgreift und gegen einen von einer Fahrzeughecktüre gebildeten Wandabschnitt drückt. Der Gegenstand ist im gesicherten Zustand auf einer schwenkbaren Auflage angeordnet. Die Nutzung eines Bandes als Fixiermittel erweist sich als unhandlich, da dieses zum Fixieren des Gegenstandes nicht über seine gesamte horizontale Erstreckung in einheitlicher Weise von dem Wandabschnitt beabstandet werden kann und somit der zu sichernde Gegenstand in umständlicher. Weise hinter dem Band durchgefädelt werden muss.

Des Weiteren ist aus der DE 190 36 065 A1 eine Rückenlehne eines Fahrzeugsitzes bekannt, die mit einer Tasche versehen ist, die eine Außenwand mit einem formstabilisierenden Teil an ihrem oberen Rand sowie flexiblen Seitenteile aufweist, die die Rückwand der Rückenlehne mit der Außenwand der Tasche verbinden.

Der Erfindung liegt die Aufgabe zugrunde, eine Vorrichtung der einleitend genannten Gattung mit einem einfach bedienbaren und insbesondere in Ruhestellung platzsparenden Fixiermittel bereitzustellen.

Diese Aufgabe ist erfindungsgemäß durch die Vorrichtung mit den Merkmale des Patentanspruchs 1 gelöst.

Der Kern der Erfindung besteht mithin darin, dass das Fixiermittel mit einem Bügel versehen ist, der an der Außenseite des zu sichernden Gegenstandes angreift und diesen gegen den Wandabschnitt drückt, so dass dieser fixiert ist. Insbesondere kleine, im wesentliche quaderförmige, flache Gegenstände, wie Aktenkoffer, Taschen oder dergleichen, können somit sicher fixiert werden, ohne dass sie bei Bewegung des Fahrzeugs bzw. Flugzeugs verrutschen können. Der Bügel ist formstabil, so dass er zu Positionierung des zu sichernden. Gegenstandes in einfacher Weise mit einer Hand gegen die Kraft der Federeinrichtung in der dem Wandabschnitt abgewandten Richtung gezogen werden kann. Der Bügel ist als im Wesentlichen U-förmige Stange ausgebildet, deren Enden jeweils mit einer Federeinrichtung verbunden sind, die die Stange in Richtung des Wandabschnitts vorspannen. Eine derartige Stange ist äußerst platzsparend und stellt in Ruhestellung, d. h. im direkt an dem Wandabschnitt anliegenden Zustand, in welchem kein Gegenstand in der Vorrichtung gesichert ist, kein gegebenenfalls störendes Bauteil dar. Die Federeinrichtungen sind jeweils an ein Ende einer jeweiligen Lagerstange fixiert, deren anderes Ende im Bereich des Wandabschnitts über eine jeweilige Fixierstange angebunden ist.

Das Fahrzeug, in dem die Vorrichtung nach der Erfindung eingesetzt werden kann, ist beispielsweise ein Personenkraftwagen, ein Lastkraftwagen, eine Bahn oder dergleichen.

Insbesondere eignet sich die Vorrichtung nach der Erfindung zur Fixierung im Bereich einer Rückseite eines vorderen Fahrzeugsitzes, so dass eine Gegenstand, wie eine Aktentasche oder dergleichen, zwischen der Rückenlehne und einem Rücksitz des betreffenden Fahrzeugs auf dem Fahrzeugboden abgestellt werden kann und zur Sicherung mittels des Fixiermittels gegen die einen Wandabschnitt darstellende Rückseite der Rückenlehne des Vordersitzes gedrückt wird. Ein Verrutschen, ein Verkippen oder ein mit einer ungewünschten Geräuschentwicklung verbundenes Hin- und Herschlagen des Gegenstandes kann so wirksam verhindert werden.

Die Vorrichtung nach der Erfindung kann aber auch an jedem anderen geeigneten Ort in einem Kraftfahrzeug angeordnet sein. Beispielsweise kann die Vorrichtung auch an einer den Wandabschnitt bildenden Rückseite eines Fahrzeugrücksitzes oder in einem Laderaum des Fahrzeugs angeordnet sein.

Der Wandabschnitt, gegen den der zu sichernde Gegenstand von dem Bügel gedrückt wird, erstreckt sich beispielsweise, wie im Fall der Nutzung einer Rückenlehnenrückseite eines Fahrzeugsitzes, in Fahrzeugquerrichtung oder, wie im Fall einer seitlichen Laderaumbegrenzung, in Fahrzeuglängsrichtung.

Die Vorrichtung nach der Erfindung eignet sich insbesondere auch als Nachrüstsatz für ein Kraftfahrzeug, der an einem Fahrzeugvordersitz im Bereich von dessen Führungsschienen montiert werden kann.

Bei einer besonders kostengünstigen Ausführungsform der Vorrichtung nach der Erfindung ist die Federeinrichtung von mindestens einer Spiralfeder gebildet. In diesem Fall können zwei Spiralfedern jeweils ein Ende des insbesondere als U-förmige Stange ausgebildeten Bügels umgreifen, wobei die anderen Enden der Spiralfedern jeweils an der jeweiligen Lagerstange fixiert sind, die im Bereich des Wandabschnitts oder auch unterhalb des Wandabschnitts gehaltert ist.

Denkbar ist es aber auch, ein beliebiges anderes Federelement, beispielsweise ein Gummigelenk oder dergleichen einzusetzen, das an einem Ende des Bügels angreift und diesen in Richtung des Wandabschnitts vorspannt.

Um der Vorrichtung nach der Erfindung ein vorteilhaftes Erscheinungsbild zu verleihen, kann der Bügel in Ruhestellung zumindest teilweise von einer nutförmigen Ausnehmung des Wandabschnitts aufgenommen sein.

Zur leichteren Bedienung kann der Bügel mit einer Greifhilfe versehen sein, welche rutschsicher von einer Hand gegriffen werden kann.

Wenn der Wandabschnitt von einer Rückenlehne bzw. Rückseite eines Fahrzeugsitzes gebildet ist und der Fahrzeugsitz in Fahrzeuglängsrichtung verschiebbar ist, ist die Vorrichtung nach der Erfindung vorzugsweise fahrzeugsitzfest gelagert.

Weitere Vorteile und vorteilhafte Ausgestaltungen des Gegenstandes nach der Erfindung sind der Beschreibung, der Zeichnung und den Patentansprüchen entnehmbar.

Ein Ausführungsbeispiel einer Ausführungsform der Vorrichtung nach der Erfindung ist in der Zeichnung schematisch vereinfacht dargestellt und wird in der nachfolgenden Beschreibung näher erläutert. Es zeigt:
- Fig. 1: eine Seitenansicht eines Fahrersitzes mit einer erfindungsgemäß ausgebildeten Vorrichtung;
- Fig. 2: eine Rückansicht des Fahrersitzes nach Fig. 1;
- Fig. 3: eine Fig. 1 entsprechende Ansicht mit einem durch die erfindungsgemäß ausgebildete Vorrichtung gesicherten Koffer; und
- Fig. 4: eine Fig. 2 entsprechende Ansicht mit gesichertem Koffer.

In der Zeichnung ist ein Fahrersitz 10 eines als Personenkraftwagen ausgebildeten Kraftfahrzeugs dargestellt, der entlang von Führungsschienen 12 in Fahrzeuglängsrichtung verschiebbar ist.

In herkömmlicher Weise umfasst der Fahrzeugsitz 10 eine verschwenkbar ausgebildete Rückenlehne 14, die eine einen Wandabschnitt darstellende Rückseite 16 aufweist. Im unteren Bereich der Rückseite 16 des Fahrzeugsitzes 10 ist eine erfindungsgemäß ausgebildete Vorrichtung 18 zur Sicherung eines Gegenstandes, im vorliegenden Fall eines Aktenkoffers 20 ausgebildet.

Die Vorrichtung 18 zur Sicherung des Aktenkoffers 20 umfasst einen im Wesentlichen U-förmigen, stangenartigen Bügel 21, dessen Basis 22 den Koffer 20 im dessen gesicherten Zustand in horizontaler Richtung übergreift und gegen die Rückseite 16 der Rückenlehne 14 des Fahrzeugsitzes 10 drückt. Hierzu sind die freien Enden der Schenkel 23A, 23B des U-förmigen Bügels 21 jeweils mit einer als Spiralfeder ausgebildeten Federeinrichtung 24A bzw. 24B verbunden, deren dem Bügel 21 abgewandtes Ende jeweils mit einer Lagerstange 26A bzw. 26B verbunden ist, welche über eine Fixierstange 28A bzw. 28B fahrzeugfest angebunden ist. Die Fixierstangen 28A, 28B können in einer bei einem herkömmlichen Fahrzeugsitz ohnehin vorhandenen Ausnehmung verschraubt bzw. verklemmt sein.

Bei einer alternativen Ausführungsform sind die Lagerstangen 26A und 26B jeweils direkt ohne Nutzung von Fixierstangen an den Fahrzeugsitz 10 angebunden.

Der Bügel 21 kann aus Metall oder Kunststoff gefertigt sein. Bei einer Fertigung aus Metall kann insbesondere die an dem zu sichernden Aktenkoffer 20 anliegende Basis 22 des aus einer Stange gefertigten Bügels 21 mit einer Kunststoffummantelung versehen sein.

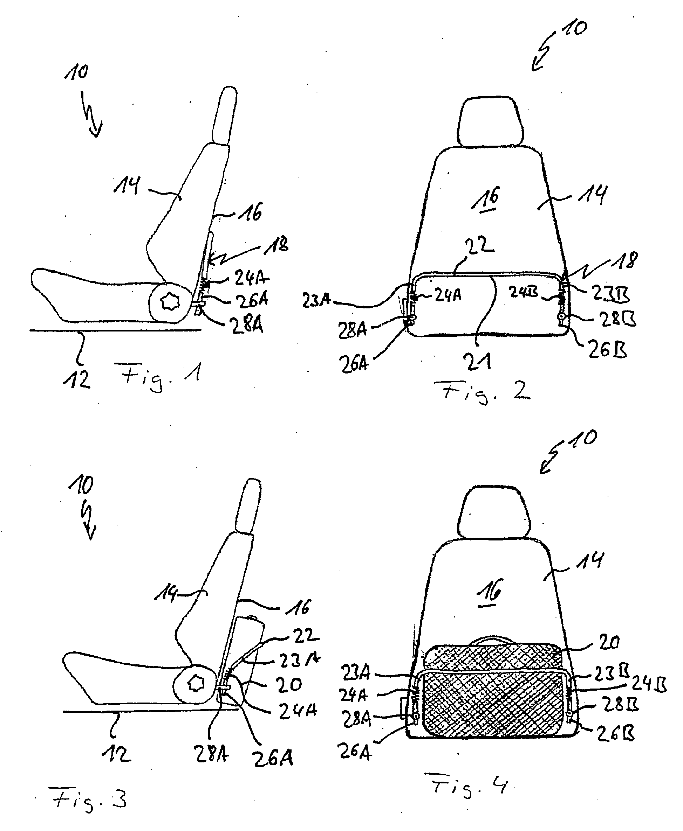

In der in den Figuren 1 und 2 dargestellten Ruhestellung liegt der Bügel 21 mit seiner Basis 22 direkt an der Rückseite 16 der Rückenlehne 14 an. In der in den Figuren 3 und 4 dargestellten, so genannten Betriebsstellung liegt die Basis 22 des Bügels 21 an dem Aktenkoffer 20 an.

Zur Sicherung des Aktenkoffers 20 greift ein Benutzer den Bügel 21 und zieht diesen mit einer Hand gegen die Kraft der Federeinrichtungen 26A und 26B in Richtung Fahrzeugheck, so dass ein Zwischenraum verbleibt, durch den hindurch der Aktenkoffer 20 mit der anderen Hand auf dem Fahrzeugboden zwischen dem Fahrzeugsitz 10 und einem hier nicht näher dargestellten Rücksitz des betreffenden Kraftfahrzeugs platziert werden kann. Dann lässt der Benutzer den Bügel 22 los, so dass dieser den Aktenkoffer 20 gegen die Rückenlehnenrückseite 16 drückt und so gegen ein Verrutschen, ein Verkippen oder ein Umfallen sichert.

### Bezugszeichen

- 10: Fahrzeugsitz
- 12: Führungsschiene
- 14: Rückenlehne
- 16: Rückseite
- 18: Vorrichtung
- 20: Aktenkoffer
- 21: Bügel
- 22: Basis
- 23A,B: Schenkel
- 24A,B: Federeinrichtungen
- 26A,B: Lagerstangen
- 28A,B: Fixierstangen

## Patentansprüche

1. Vorrichtung zur Sicherung eines Gegenstandes (20), insbesondere einer Tasche, eines Aktenkoffers oder dergleichen an einem Wandabschnitt (16) in einem Fahrzeug oder Flugzeug, umfassend ein Fixiermittel (18), das den Gegenstand (20) in einer horizontalen Richtung übergreift und gegen den Wandabschnitt (16) drückt, wobei das Fixiermittel (18) einen den Gegenstand (20) übergreifenden Bügel (21) umfasst, der als U-förmige Stange ausgebildet ist, deren Enden jeweils mit einer die Stange in Richtung des Wandabschnitts (16) vorspannenden Federeinrichtung (24A, 24B) verbunden sind,
**dadurch gekennzeichnet, dass** die Federeinrichtungen jeweils an einem Ende einer jeweiligen Lagerstange (26A, 26B) fixiert sind, deren anderes Ende im Bereich des Wandabschnitts (16) über eine jeweilige Fixierstange (28A,28B) fahrzeugfest angebunden ist.

2. Vorrichtung nach Anspruch 1, **dadurch gekennzeichnet, dass** die Federeinrichtung (24A, 24B) von einer Spiralfeder gebildet sind.

3. Vorrichtung nach Anspruch 1 oder 2, **dadurch gekennzeichnet, dass** der Bügel (21) in Ruhestellung zumindest teilweise von einer nutförmigen Ausnehmung des Wandabschnitt (16) aufgenommen ist.

4. Vorrichtung nach einem der Ansprüche 1 bis 3, **dadurch gekennzeichnet, dass** der Bügel (21) mit einer Greifhilfe versehen ist.

5. Vorrichtung nach einem der Ansprüche 1 bis 4, **dadurch gekennzeichnet, dass** der Wandabschnitt (16) von einer Rückenlehne (14) eines Fahrzeugsitzes (10) gebildet ist.

## Claims

1. Apparatus for securing an article (20), in particular a bag, a briefcase or the like, to a wall section (16) in a vehicle or aeroplane, comprising a fixing means (18) which engages over the article (20) in a horizontal direction and presses it against the wall section (16), wherein the fixing means (18) comprises a bracket (21), which engages over the article (20), is in the form of a U-shaped bar and the ends of which are in each case connected to a spring device (24A, 24B) that prestresses the bar in the direction of the wall section (16),
**characterized in that** the spring devices are each fixed at one end of a respective storage bar (26A, 26B), the other end of which is fastened firmly to the vehicle in the region of the wall section (16) via a respective fixing bar (28A, 28B).

2. Apparatus according to Claim 1, **characterized in that** the spring device (24A, 24B) is formed by a spiral spring.

3. Apparatus according to Claim 1 or 2, **characterized in that**, in the rest position, the bracket (21) is accommodated at least partially in a groove-like recess in the wall section (16).

4. Apparatus according to one of Claims 1 to 3, **characterized in that** the bracket (21) is provided with a gripping aid.

5. Apparatus according to one of Claims 1 to 4, **characterized in that** the wall section (16) is formed by a backrest (14) of a vehicle seat (10).

## Revendications

1. Dispositif pour sécuriser un objet (20), en particulier une pochette, un porte-documents ou similaire à une portion de paroi (16) dans un véhicule automobile ou un avion, comprenant un moyen de fixation (18), qui vient en prise par le dessus avec l'objet (20) dans une direction horizontale et qui le presse contre la portion de paroi (16), le moyen de fixation (18) comprenant un étrier (21) venant en prise par le dessus avec l'objet (20), qui est réalisé sous forme de barre en forme de U, dont les extrémités sont chacune connectées à un dispositif de ressort (24A, 24B) précontraignant la barre dans la direction de la portion de paroi (16),
**caractérisé en ce que**
les dispositifs de ressort sont fixés à chaque fois à une extrémité d'une barre de palier respective (26A, 26B), dont l'autre extrémité est reliée fixement au véhicule dans la région de la portion de paroi (16) par le biais d'une barre de fixation respective (28A, 28B).

2. Dispositif selon la revendication 1, **caractérisé en ce que** le dispositif de ressort (24A, 24B) est formé par un ressort spiral.

3. Dispositif selon la revendication 1 ou 2, **caractérisé en ce que** l'étrier (21) est reçu dans la position de repos au moins en partie par un évidement en forme de rainure de la portion de paroi (16).

4. Dispositif selon l'une quelconque des revendications 1 à 3, **caractérisé en ce que** l'étrier (21) est pourvu d'un auxiliaire de préhension.

5. Dispositif selon l'une quelconque des revendications 1 à 4, **caractérisé en ce que** la portion de paroi (16) est formée par un dossier (14) d'un siège de véhicule (10).
